# EUROPÄISCHE PATENTSCHRIFT

(11) **EP 3 274 110 B1**
(45) Veröffentlichungstag und Bekanntmachung des Hinweises auf die Patenterteilung: **09.01.2019**
(21) Anmeldenummer: 16705466.7
(22) Anmeldetag: 12.02.2016
(51) Int. Cl.: B21D 43/00, G05B 19/402, B21D 22/22, B23Q 3/18, B21D 22/02

(54) **UMFORMWERKZEUG UND VERFAHREN ZUR OPTIMIERUNG EINER PLATINENUMFORMUNG IN EINEM UMFORMWERKZEUG**
FORMING TOOL AND METHOD FOR OPTIMIZING BOARD FORMING IN A FORMING TOOL
OUTIL DE FORMAGE ET PROCÉDÉ D'OPTIMISATION DE FORMAGE DE FLAN DANS UN OUTIL DE FORMAGE

(30) Priorität: 25.03.2015 DE 102015205468
(43) Veröffentlichungstag der Anmeldung: 31.01.2018
(73) Patentinhaber: Volkswagen Aktiengesellschaft, 38440 Wolfsburg (DE)
(72) Erfinder: BÄUME, Tobias, 16909 Wittstock (DE); ERFURT, Artur, 38473 Tiddische (DE); KAPPEY, Jens, 38448 Wolfsburg (DE); MATVEEV, Alexander, 38444 Wolfsburg (DE)
(86) Internationale Anmeldenummer: PCT/EP2016/053025
(87) Internationale Veröffentlichungsnummer: WO 2016/150617

(56) Entgegenhaltungen:
- WO-A1-2004/043645
- DE-A1-102009 019 528
- DE-A1-102011 102 519
- DE-U1-202014 004 486

## Beschreibung

Die Erfindung betrifft ein wie im Oberbegriff des Anspruchs 1 definiertes Umformwerkzeug sowie ein wie im Oberbegriff des Anspruchs 6 definiertes Verfahren zur Optimierung einer Platinenumformung in einem Umformwerkzeug.

Ein Umformwerkzeug und ein Verfahren der eingangsgenannten Art sind jeweils aus DE 10 2011 102 519 A1 bekannt. Das hieraus bekannte Umformwerkzeug weist mehrere in Richtung eines oberen Werkzeugteils vorstehende Einweiser aufweisen, die jeweils mit einer abgeschrägten Fläche ausgebildet sind, auf denen ein Umfangsrand der Platine beim im Umformwerkzeug Ablegen dieser abgleiten kann, um quer zu einer vertikalen Arbeitsrichtung eine horizontale Ausrichtung der Platine relativ zum Umformwerkzeug zu ermöglichen. Einige der Einweiser sind mittels Stellgliedern quer zur Arbeitsrichtung bewegbar, um gegen den Umfangsrand einer zu positionierenden Platine zu drücken und dadurch die Platine gegen voreingestellte, fixierte Einweiser der mehreren Einweiser zu schieben, wodurch eine Positionierung der Platine relativ zum Umformwerkzeug herbeigeführt wird.

Eine Sensoranordnung des in DE 10 2011 102 519 A1 beschriebenen Umformwerkzeugs ist eingerichtet, mindestens einen mit der Umformung der Platine in Zusammenhang stehenden Parameter zu erfassen. Genauer weist die Sensoranordnung wenigstens einen Sensor zur Erfassung der Position einer im Umformwerkzeug abgelegten Platine auf, um die korrekte Ausrichtung der Platine zu erfassen, mit dem Ziel, das Schließen des Umformwerkzeugs bzw. einen Pressenhub erst dann frei zu geben, wenn die Platine korrekt ausgerichtet ist.

Im Ergebnis wird bei dem in DE 10 2011 102 519 A1 beschriebenen Umformwerkzeug die Platinenlage bzw. Platinenpositionierung quer zur Arbeitsrichtung durch die voreingestellten, fixierten Einweiser vorgegeben. Die Sensoranordnung dient dabei nur dazu, die Positionierung der Platine in der voreingestellten Position zu bestätigen. Die Voreinstellung der Platinenpositionierung wird üblicherweise nur in einer Einarbeitungsphase des Umformwerkzeugs durchgeführt und erfolgt üblicherweise nach Erfahrungswissen manuell durch Verstellen der zu fixierenden Einweiser, um einen optimalen Arbeitspunkt für die Umformung der Platine zu finden. Der optimale Arbeitspunkt definiert sich dabei z.B. durch eine möglichst gleichbleibende platinenbezogene Formänderungsverteilung im Umformteil, wobei die Platinenlage im Umformwerkzeug (quer zur Arbeitsrichtung) wesentlichen Einfluss auf die Formänderungsverteilung am Umformteil hat.

In einer Produktionsphase werden bei solch einem üblichen Umformwerkzeug die voreingestellten, fixierten Einweiser nicht mehr verstellt. Daher werden, falls bedingt durch z.B. Materialunterschiede, unterschiedliche Platinendicken und/oder unterschiedliche Schmierbedingungen Prozessschwankungen beim Umformen auftreten, zum Einhalten des optimalen Arbeitspunktes üblicherweise Pressenparameter (z.B. Ziehkissendrücke) und eine Platinenhalterdistanzierung geändert. Somit bleibt der optimale Arbeitspunkt quantitativ undefiniert, wobei die Änderungen der Pressenparameter und der Blechhalterdistanzierung insbesondere in der Produktionsphase üblicherweise empirisch erfolgen, was sehr zeitaufwendig ist und keine Garantie gewährt, dass der optimale Arbeitspunkt genau erreicht wird. Im Ergebnis lässt sich die Platinenumformung in derartigen Umformwerkzeugen nur begrenzt auf einen optimalen Arbeitspunkt optimieren.

Die oben genannte DE 10 2011 102 519 A1 bildet den nächstliegenden Stand der Technik. Als Stand der Technik werden ergänzend noch genannt die DE 20 2014 004 486 U1, die eine Einweisungsvorrichtung zur Positionierung eines Werkstücks relativ zu einem Werkzeug beschreibt, die WO 2004/043645 A1, die eine Einweisungsvorrichtung mit einer Werkstücklage-Kontrolleinrichtung zur Positionierung mindestens eines Werkstücks beschreibt, und die DE 10 2009 019 528 A1, die einen Einweiser zum Positionieren eines Werkstücks beschreibt. Der Erfindung liegt die Aufgabe zugrunde, ein gemäß dem Oberbegriff des Anspruchs 1 definiertes Umformwerkzeug sowie ein gemäß dem Oberbegriff des Anspruchs 6 definiertes Verfahren so fortzubilden, dass eine verbesserte Optimierung der Platinenumformung auf einen optimalen Arbeitspunkt ermöglicht wird.

Dies wird bezüglich des Umformwerkzeugs mit der Merkmalskombination des Anspruchs 1 erreicht und bezüglich des Verfahrens mit der Kombination der Verfahrensschritte des Anspruchs 6 erreicht. Weiterbildungen der Erfindung sind in den jeweiligen abhängigen Ansprüchen definiert.

Gemäß der Erfindung weist ein Umformwerkzeug zwei Werkzeugteile, eine Mehrzahl von verstellbaren Einweisern und eine Sensoranordnung auf. Die beiden Werkzeugteile sind zueinander in einer Arbeitsrichtung relativbeweglich und vorgesehen und eingerichtet zum dazwischen Aufnehmen und Umformen einer Platine, um aus dieser ein Umformteil zu formen. Die Einweiser sind vorgesehen und eingerichtet zum Kontaktieren eines Umfangsrandes der Platine, um diese quer zur Arbeitsrichtung zwischen den beiden Werkzeugteilen zu positionieren. Die Einweiser weisen jeweils ein Stellglied auf, über welches ein Platinenkontaktierungselement des jeweiligen Einweisers zum Positionieren der Platine quer zur Arbeitsrichtung verfahrbar ist. Die Sensoranordnung ist vorgesehen und eingerichtet zum Erfassen mindestens eines mit der Umformung der Platine in Zusammenhang stehenden Parameters.

Das erfindungsgemäße Umformwerkzeug zeichnet sich dadurch aus, dass die Sensoranordnung eingerichtet ist, als den mindestens einen Parameter korrespondierend zu jedem Einweiser mindestens einen Kennwert zu erfassen, welcher mit einer platinenbezogenen Formänderungsverteilung im Umformteil korreliert, also den jeweiligen Arbeitspunkt beschreibt bzw. abbildet. Außerdem ist eine Regeleinrichtung vorgesehen, welche mit den jeweiligen Stellgliedern der Einweiser und mit der Sensoranordnung verbunden ist und welche eingerichtet ist, die Stellglieder auf Basis der erfassten Kennwerte so zum Verfahren der Platinenkontaktierungselemente anzusteuern, dass umformteilseitig eine vorbestimmte Soll-Formänderungsverteilung erzielt wird.

Der Erfindung liegt der Grundgedanke zugrunde, dass sich wie oben erläutert der optimale Arbeitspunkt einer Platinenumformung durch eine möglichst gleichbleibende platinenbezogene Formänderungsverteilung im Umformteil definieren lässt, wobei die Platinenlage im Umformwerkzeug (quer zur Arbeitsrichtung) wesentlichen Einfluss auf die Formänderungsverteilung am Umformteil hat. Dadurch, dass gemäß der Erfindung korrespondierend zu jedem Einweiser mindestens ein zur platinenbezogenen Formänderungsverteilung im Umformteil korrelierender Kennwert erfassbar ist, lässt sich diese quantifizieren. Diese Kennwerte, welche den jeweiligen Arbeitspunkt beschreiben bzw. abbilden, werden gemäß der Erfindung dann vorteilhaft verwendet, um mittels der verstellbaren Einweiser die Platinenpositionierung bzw. Platinenlage zum Erzielen einer umformteilseitigen Soll-Formänderungsverteilung anzupassen. Die Soll-Formänderungsverteilung kann dabei vorteilhaft einen vorbestimmten optimalen Arbeitspunkt für die Platinenumformung repräsentieren. Im Ergebnis wird somit eine verbesserte Optimierung der Platinenumformung auf den optimalen Arbeitspunkt ermöglicht.

Vorteilhaft lässt sich mit dem erfindungsgemäßen Umformwerkzeug das Einhalten des optimalen Arbeitspunktes automatisieren, wobei die Regelung automatisch auf Prozessschwankungen reagiert und diese mit minimalem Zeitaufwand und ohne manuelles empirisches Nachstellen ausgleicht.

Gemäß einer Ausführungsform der Erfindung ist das Umformwerkzeug als Tiefziehwerkzeug ausgebildet. Auf Tiefziehwerkzeuge lassen sich die o.g. Zusammenhänge von optimalem Arbeitspunkt, platinenbezogener Formänderungsverteilung und Platinenpositionierung bzw. Platinenlage im Umformwerkzeug besonders treffend und vorteilhaft zur Optimierung der Platinenumformung anwenden. Bevorzugt ist das Umformwerkzeug als Blechumformwerkzeug ausgebildet.

Gemäß einer weiteren Ausführungsform des erfindungsgemäßen Umformwerkzeugs ist die Regeleinrichtung eingerichtet, die korrespondierend zu den jeweiligen Einweisern erfassten Kennwerte jeweils mit einem zugehörigen vorbestimmten Sollwert zu vergleichen, jeweils eine Abweichung des Kennwertes vom Sollwert zu bestimmen, auf Basis der jeweiligen Abweichungen jeweilige Stellwerte für die Stellglieder zum Kompensieren der Abweichung zu bestimmen und die Stellglieder jeweils auf Basis der Stellwerte zum Verfahren der Platinenkontaktierungselemente anzusteuern.

Mit anderen Worten wird hier vorteilhaft die umformteilseitige Soll-Formänderungsverteilung durch die vorbestimmten Sollwerte quantifiziert, so dass sich die Optimierung der Platinenumformung auf den optimalen Arbeitspunkt in einfacher Weise durch eine Regelstrecke realisieren lässt, bei der die Kennwerte durch Minimieren der Abweichung auf die Sollwerte eingeregelt werden.

Gemäß noch einer Ausführungsform des erfindungsgemäßen Umformwerkzeugs ist die Sensoranordnung eingerichtet, korrespondierend zu jedem Einweiser mehrere unterschiedliche zur platinenbezogenen Formänderungsverteilung im Umformteil korrelierende, d.h. den jeweiligen Arbeitspunkt beschreibende bzw. abbildende, Kennwerte zu erfassen. Die Regeleinrichtung ist dann eingerichtet, den Stellwert für ein jeweiliges Stellglied zu bestimmen unter kombinierter Auswertung von für die unterschiedlichen Kennwerte jeweils bestimmten Abweichungen zu ihren jeweiligen Sollwerten. Die kombinierte Auswertung kann dabei mittels einer rechnerischen Kombinationsvorschrift erfolgen, z.B. modellbasiert. Durch die Verwendung mehrerer zur platinenbezogenen Formänderungsverteilung im Umformteil korrelierender Kennwerte pro Einweiserposition kann die Quantifizierung der vorliegenden Formänderungsverteilung genauer erfolgen und können Erfassungsfehler besser kompensiert werden.

Gemäß noch einer weiteren Ausführungsform des erfindungsgemäßen Umformwerkzeugs weist das Umformwerkzeug eine Platinenhalteranordnung auf, die einen Platinenhalter und einen Gegenplatinenhalter umfasst, welche entlang der Arbeitsrichtung zueinander relativbeweglich sind, um beim Umformen einen entlang des Umfangsrandes definierten Flanschabschnitt der Platine zwischen einander zu klemmen. Die Sensoranordnung ist dann eingerichtet, als den mindestens einen Kennwert mindestens eines zu erfassen von einem platinenbezogenen Flanscheinzug des Umformteils, einem beim Umformen vorhandenen Kontaktdruck der Platinenhalteranordnung zum Flanschabschnitt, einer beim Umformen vorhandenen Temperatur der Platinenhalteranordnung, einer beim Umformen vorhandenen Flussgeschwindigkeit des Flanschabschnitts und einer beim Umformen vorhandenen Reibkraft zwischen Platinenhalteranordnung und Flanschabschnitt. Diese unterschiedlichen jeweils zur platinenbezogenen Formänderungsverteilung im Umformteil korrelierenden Kennwerte können in wahlfreier Gruppierung in eine wie o.g. kombinierte Auswertung einbezogen werden. Der Zusammenhang zwischen den Kennwerten und der Platinenlage bzw. Platinenpositionierung im Umformwerkzeug 1 kann dabei z.B. adaptiv (modellfrei) oder anhand eines experimentellen oder analytischen Modells gebildet werden.

Gemäß noch einer Ausführungsform des erfindungsgemäßen Umformwerkzeugs ist die Sensoranordnung eingerichtet, den mindestens einen Kennwert benachbart zu dem Platinenkontaktierungselement jedes Einweisers zu erfassen. Somit werden die Kennwerte vorteilhaft nahe zu den Positionen entlang des Umfangsrandes eines Umformteils erfasst, an denen im Nachgang bei einer nachfolgenden Platine das Positionieren bzw. Verlagern der Platine durchgeführt wird. Somit lässt sich die Genauigkeit der Regelung zur Optimierung einer Platinenumformung verbessern.

Gemäß der Erfindung wird auch ein Verfahren zur Optimierung (im Folgenden Optimierungsverfahren) einer Platinenumformung in einem Umformwerkzeug bereitgestellt. Da die vorteilhaften Wirkungen des erfindungsgemäßen Optimierungsverfahrens in allen seinen nachfolgend aufgeführten bevorzugten Ausführungsformen mit jenen des erfindungsgemäßen Umformwerkzeugs übereinstimmen, wird auf deren nochmalige Erwähnung verzichtet.

Bei dem erfindungsgemäßen Optimierungsverfahren wird eine Platine zwischen zwei zueinander in einer Arbeitsrichtung relativbewegliche Werkzeugteile des Umformwerkzeugs eingebracht, um aus der Platine per Umformung ein Umformteil zu formen. Vor der Umformung wird eine Platinenpositionierung in Bezug auf das Umformwerkzeug durchgeführt, indem die Platine an einem Umfangsrand dieser an einer Mehrzahl von Kontaktstellen kontaktiert und dadurch zwischen den beiden Werkzeugteilen quer zur Arbeitsrichtung positioniert wird. Außerdem wird bei dem erfindungsgemäßen Optimierungsverfahren mindestens ein mit der Umformung der Platine in Zusammenhang stehender Parameter erfasst.

Das erfindungsgemäße Optimierungsverfahren zeichnet sich dadurch aus, dass als der mindestens eine Parameter korrespondierend zu jeder Kontaktstelle mindestens ein Kennwert erfasst wird, welcher mit einer platinenbezogenen Formänderungsverteilung im Umformteil korreliert, und dass auf Basis der erfassten Kennwerte die Platinenpositionierung quer zur Arbeitsrichtung so angepasst wird, dass umformteilseitig eine vorbestimmte Soll-Formänderungsverteilung erzielt wird.

Gemäß einer Ausführungsform des erfindungsgemäßen Optimierungsverfahrens führt das Umformwerkzeug einen Tiefziehprozess aus, um die Umformung der Platine zu dem Umformformteil zu erzielen. Bevorzugt wird als Platine eine Blechplatine verwendet.

Gemäß einer weiteren Ausführungsform des erfindungsgemäßen Optimierungsverfahrens werden die korrespondierend zu den jeweiligen Kontaktstellen erfassten Kennwerte jeweils mit einem zugehörigen vorbestimmten Sollwert verglichen, wird jeweils eine Abweichung des Kennwertes vom Sollwert bestimmt, werden auf Basis der jeweiligen Abweichungen Stellwerte zum Kompensieren der Abweichung bestimmt und wird die Platinenpositionierung quer zur Arbeitsrichtung auf Basis der Stellwerte für jede Kontaktstelle angepasst.

Gemäß noch einer Ausführungsform des erfindungsgemäßen Optimierungsverfahrens werden korrespondierend zu den jeweiligen Kontaktstellen mehrere unterschiedliche zur platinenbezogenen Formänderungsverteilung im Umformteil korrelierende Kennwerte erfasst, wobei der Stellwert für eine jeweilige Kontaktstelle bestimmt wird unter kombinierter Auswertung von für die unterschiedlichen Kennwerte jeweils bestimmten Abweichungen zu ihren jeweiligen Sollwerten.

Gemäß noch einer weiteren Ausführungsform des erfindungsgemäßen Optimierungsverfahrens wird beim Umformen ein entlang des Umfangsrandes definierter Flanschabschnitt der Platine geklemmt zwischen einem Platinenhalter und einem Gegenplatinenhalter, welche entlang der Arbeitsrichtung zueinander relativbeweglich sind und zusammen eine Platinenhalteranordnung des Umformwerkzeugs bilden. Als der mindestens eine Kennwert wird mindestens eines erfasst von einem platinenbezogenen Flanscheinzug des Umformteils, einem beim Umformen vorhandenen Kontaktdruck der Platinenhalteranordnung zum Flanschabschnitt, einer beim Umformen vorhandenen Temperatur der Platinenhalteranordnung, einer beim Umformen vorhandenen Flussgeschwindigkeit des Flanschabschnitts und einer beim Umformen vorhandenen Reibkraft zwischen Platinenhalteranordnung und Flanschabschnitt.

Gemäß noch einer Ausführungsform des erfindungsgemäßen Optimierungsverfahrens wird der mindestens eine Kennwert benachbart zu jeder umfangsrandseitigen Kontaktstelle erfasst.

Bevorzugt wird das erfindungsgemäße Optimierungsverfahren unter Verwendung eines Umformwerkzeugs gemäß einer, mehreren oder allen zuvor beschriebenen Ausführungsformen der Erfindung in jeder denkbaren Kombination durchgeführt.

Im Folgenden wird die Erfindung anhand bevorzugter Ausführungsformen und unter Bezugnahme auf die beigefügten Figuren beschrieben werden.
- Fig. 1: zeigt eine schematische Schnittansicht eines Umformwerkzeugs gemäß einer Ausführungsform der Erfindung.
- Fig. 2: zeigt eine schematische Draufsicht auf einen unteren Werkzeugteil des Umformwerkzeugs von Fig. 1 in einem Einrichtzustand.
- Fig. 3: zeigt eine Fig. 2 ähnliche Ansicht mit dem Umformwerkzeug in einem ersten Betriebszustand.
- Fig. 4: zeigt eine Fig. 2 ähnliche Ansicht mit dem Umformwerkzeug in einem zweiten Betriebszustand.
- Fig. 5: zeigt ein Blockdiagramm eines Regelkreises zur Ausführung eines erfindungsgemäßen Verfahrens zur Optimierung einer Platinenumformung in dem Umformwerkzeug von Fig. 1.

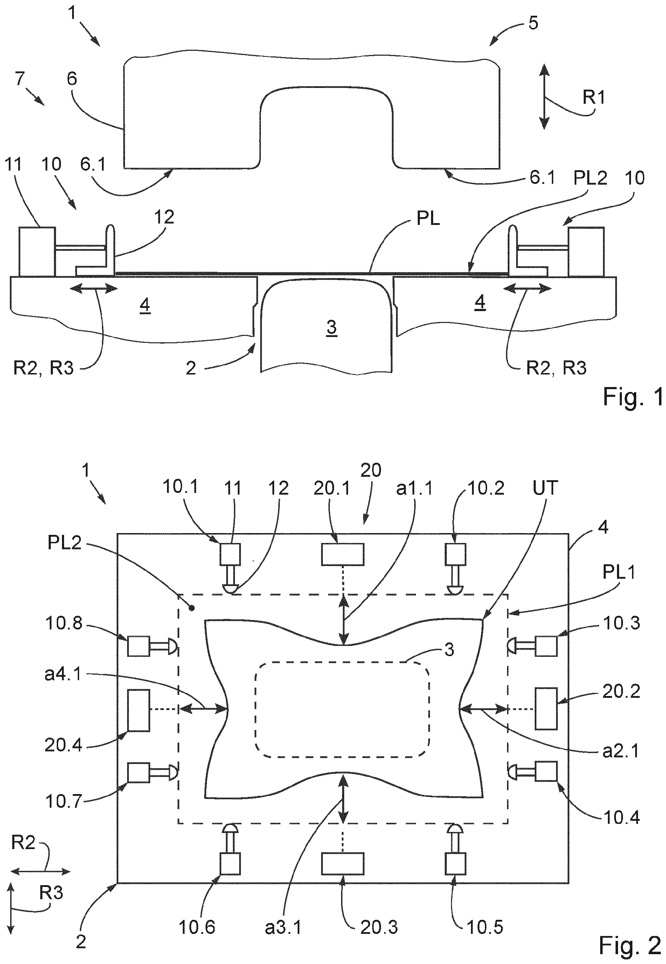

Im Folgenden werden unter Bezugnahme auf die Figuren 1 bis 5 gemäß Ausführungsformen der Erfindung ein Umformwerkzeug 1 sowie ein Verfahren zur Optimierung einer Platinenumformung in dem Umformwerkzeug 1 beschrieben werden.

Das in Fig. 1 gezeigte Umformwerkzeug 1 ist zum Umformen einer Platine PL aus Blechmaterial vorgesehen und insbesondere eingerichtet, die Platine PL mittels eines Tiefziehprozesses zu einem rein exemplarisch als napfförmiges Tiefziehteil ausgebildeten Umformteil UT (siehe z.B. Fig. 2) umzuformen.

Wie aus den Figuren 1 und 2 ersichtlich, weist das Umformwerkzeug 1 einen unteren Werkzeugteil 2 und einen oberen Werkzeugteil 5 auf, die in einer in Fig. 1 vertikal verlaufenden Arbeitsrichtung R1 zueinander relativbeweglich sind und die eingerichtet sind, zwischen einander die Platine PL aufzunehmen, um diese durch in der Arbeitsrichtung R1 gegeneinander Verfahren der beiden Werkzeugteile 2, 5 in einem Tiefziehprozess zu dem Umformteil UT umzuformen.

Der untere Werkzeugteil 2 umfasst zum Umformen der Platine PL einen Tiefziehstempel 3, welcher ortsfest auf eine Grundplatte (nicht dargestellt) montiert ist, und einen den Tiefziehstempel 3 umgebenden ringförmigen Platinenhalter 4. Der obere Werkzeugteil 5 umfasst zum Umformen der Platine PL eine an einem Pressenstößel einer Umformpresse (beide nicht dargestellt) zu befestigende Tiefziehmatrize 6, an welcher ein ringförmiger Gegenplatinenhalter 6.1 als Teilabschnitt der Tiefziehmatrize 6 ausgebildet ist. Der Platinenhalter 4 und der Gegenplatinenhalter 6.1 bilden zusammen eine Platinenhalteranordnung 7 des Umformwerkzeugs 1.

Im Umformprozess wird durch vertikales Verfahren des Pressenstößels und damit der Tiefziehmatrize 6 eine Relativbewegung von Tiefziehstempel 3 und Tiefziehmatrize 6 in der Arbeitsrichtung R1 bewirkt, wodurch die Platine PL vom Tiefziehstempel 3 in die Tiefziehmatrize 6 gedrückt wird.

Der Platinenhalter 4 ist auf einem hydraulisch vertikal verfahrbaren Hubtisch (nicht dargestellt) der Umformpresse aufgenommen und wird für den Umformprozess bzw. Tiefziehprozess vor dem Verfahren der Tiefziehmatrize 6 in Arbeitsrichtung R1 nach vertikal oben verfahren, so dass zwischen dem Platinenhalter 4 und dem dazu gegenüberliegenden Gegenplatinenhalter 6.1 eine parallel zu der Relativbewegung von Tiefziehstempel 3 und Tiefziehmatrize 6 gerichtete Relativbewegung bewirkt wird, um beim Umformen einen entlang eines Umfangsrandes PL1 definierten Flanschabschnitt PL2 der Platine PL zwischen Platinenhalter 4 und Gegenplatinenhalter 6.1 mit einer bestimmten Platinenhaltekraft zu klemmen. Beim nach vertikal unten Verfahren der Tiefziehmatrize 6 wird dann der Platinenhalter 4 unter definierter Gegenkraft des Hubtisches, welche die Platinenhaltekraft erzeugt, vom Gegenplatinenhalter 6.1 nach vertikal unten gedrückt.

Wie aus den Figuren 1 und 2 ersichtlich, weist das Umformwerkzeug 1, um vor der Umformung eine Positionierung der Platine PL (Platinenpositionierung) in Bezug auf das Umformwerkzeug 1 durchführen zu können, eine Mehrzahl von verstellbaren Einweisern 10.1 bis 10.8 (in Fig. 1 und allgemein als Einweiser 10 bezeichnet) auf, die um einen Außenrandabschnitt des Platinenhalters 4 des unteren Werkzeugteils 2 verteilt angeordnet sind, um durch Kontaktieren des Umfangsrandes PL1 der Platine PL diese quer zur Arbeitsrichtung R1 zwischen den beiden Werkzeugteilen 2, 5 zu positionieren bzw. ggf. zu verlagern.

Die Einweiser 10 weisen jeweils ein Stellglied 11 (z.B. einen Servomotor mit Wandlergetriebe von Rotationsbewegung auf Linearbewegung) auf, über welches ein Platinenkontaktierungselement 12 des jeweiligen Einweisers 10 zum Positionieren der Platine PL quer zur Arbeitsrichtung R1, d.h. in in den Figuren 1 und 2 jeweils horizontal verlaufenden Querrichtungen R2, R3, verfahrbar ist.

Wie z.B. aus Fig. 2 ersichtlich, weist das Umformwerkzeug 1 außerdem eine Sensoranordnung 20 mit einer Mehrzahl von um den Außenrandabschnitt des Platinenhalters 4 des unteren Werkzeugteils 2 verteilt angeordneten Sensoren 20.1 bis 20.4 (in der vorliegenden Ausführungsform vier Sensoren) auf. Die Sensoranordnung 20 dient zum Erfassen mindestens eines mit der Umformung der Platine PL in Zusammenhang stehenden Parameters.

Genauer ist in der vorliegenden Ausführungsform die Platine PL rein exemplarisch rechteckig ausgebildet und sind an jeder Langseite und an jeder Kurzseite eines rechteckigen Umformbereichs des unteren Werkzeugteils 2 für die Platine PL jeweils zwei Einweiser 10 angeordnet. An jeder Langseite und an jeder Kurzseite des rechteckigen Umformbereichs für die Platine PL ist jeweils einer der Sensoren 20.1 bis 20.4 mittig zwischen den beiden platinenseitenspezifischen Einweisern 10 angeordnet, sodass sich jeweils zwei Sensoren 20.1, 20.3 einander gegenüberliegend im Wesentlichen auf der Kurzachse befinden und sich jeweils zwei Sensoren 20.2, 20.4 einander gegenüberliegend im Wesentlichen auf der Langachse befinden. In der vorliegenden Ausführungsform sind die Sensoren 20.1 bis 20.4 jeweils als Wegmesssensor z.B. auf induktiver, kapazitiver oder optischer Funktionsbasis ausgebildet.

Mittels der Sensoren 20.1 bis 20.4 der Sensoranordnung kann an jeder Langseite und jeder Kurzseite des rechteckigen Umformbereichs des unteren Werkzeugteils 2 ein durch die Umformung der Platine PL zu dem Umformteil UT an dem Flanschabschnitt PL2 entstehender Flanscheinzug a1.n bis a4.n (mit n = 1, 2 oder 3 gemäß der beschriebenen Ausführungsform) als Längenmaß erfasst werden. Genauer wird, um korrespondierend zu jedem Einweiser 10 als den mindestens einen mit der Umformung der Platine PL in Zusammenhang stehenden Parameter mindestens einen Kennwert (hier in Form des Flanscheinzugs a1.n bis a4.n) als Ist-Kennwert zu erfassen, für jedes Paar platinenseitenspezifischer Einweiser 10.1, 10.2; 10.3, 10.4; 10.5, 10.6 und 10.7, 10.8 ein gemeinsamer Flanscheinzug a1.n, a2.n, a3.n bzw. a4.n als der Kennwert erfasst.

Wie eingangs bereits erläutert, ist der optimale Arbeitspunkt beim Tiefziehen grundsätzlich durch eine möglichst gleichbleibende platinenbezogene Formänderungsverteilung im Tiefziehteil bzw. Umformteil UT definiert, wobei die Querlage der Platine PL (in den Querrichtungen R2, R3) im Umformwerkzeug 1 wesentlichen Einfluss auf die Formänderungsverteilung hat. Wie eingangs außerdem bereits erläutert, kann der durch die Umformung der Platine PL zu dem Umformteil UT an dem Flanschabschnitt PL2 entstehende Flanscheinzug a1.n bis a4.n als ein aussagekräftiger Indikator bzw. Kennwert (Kennzahl) für das Einhalten des optimalen Arbeitspunktes, d.h. eine möglichst gleichbleibende Formänderungsverteilung, verwendet werden.

Somit ist die Sensoranordnung 20 eingerichtet, als den mindestens einen mit der Umformung der Platine PL in Zusammenhang stehenden Parameter korrespondierend zu jedem Einweiser 10, d.h. benachbart zu dem Platinenkontaktierungselement 12 jedes Einweisers 10, mindestens einen Kennwert (hier in Form des Flanscheinzugs a1.n bis a4.n) zu erfassen, welcher mit der platinenbezogenen Formänderungsverteilung im Umformteil UT korreliert.

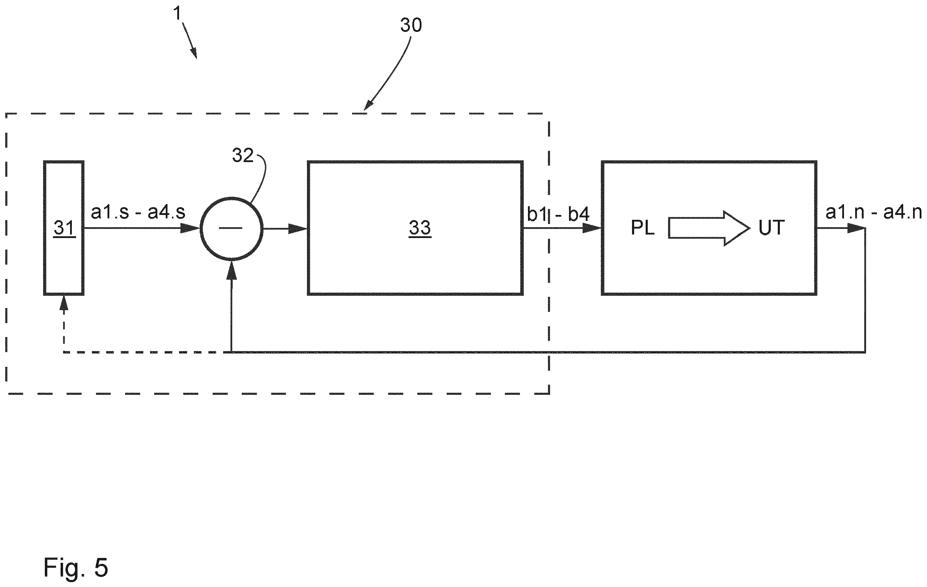

Wie unter zusätzlicher Bezugnahme auf Fig. 5 ersichtlich, weist das Umformwerkzeug 1 außerdem eine Regeleinrichtung 30 auf, welche über nicht dargestellte elektrische Leitungen mit den jeweiligen Stellgliedern 11 der Einweiser 10 und mit den Sensoren 20.1 bis 20.4 der Sensoranordnung 20 verbunden ist. Die Regeleinrichtung 30 umfasst eine Speichereinheit 31 (mit z.B. einem ROM, einem RAM usw.) zum Abspeichern vorbestimmter Werte, eine Differenzbildnereinheit 32 zum Bestimmen einer Regelabweichung bzw. Regeldifferenz und eine Rechnereinheit 33 zum Bestimmen von Stellgrößen zur Kompensation der Regelabweichung.

Genauer ist die Regeleinrichtung 30 eingerichtet, die korrespondierend zu den jeweiligen Einweisern 10 erfassten Flanscheinzüge a1.n bis a4.n als Kennwerte in der Differenzbildnereinheit 32 jeweils zu vergleichen mit einem zugehörigen vorbestimmten Sollwert a1.s bis a4.s, welcher in der Speichereinheit 31 hinterlegt ist.

Die Differenzbildnereinheit 32 ist eingerichtet, jeweils eine Abweichung (Regelabweichung) des Flanscheinzugs (Kennwertes) a1.n bis a4.n vom Sollwert a1.s bis a4.s zu bestimmen und der Rechnereinheit 33 zuzuführen. Die Rechnereinheit 33 ist eingerichtet, auf Basis der jeweiligen Abweichungen jeweilige Stellwerte b1 bis b4 (als Stellgrößen) für die Stellglieder 11 der Einweiser 10 zum Kompensieren bzw. Minimieren der Abweichung zu bestimmen und die Stellglieder 11 jeweils auf Basis der Stellwerte b1 bis b4 zum in Querrichtung R2 bzw. R3 Verfahren der Platinenkontaktierungselemente 12 anzusteuern.

Die Sollwerte a1.s bis a4.s können dabei beispielsweise bei der Einarbeitung des Umformwerkzeugs 1 aus einem als "Gutteil" bewerteten Umformteil UT, wie in Fig. 2 gezeigt, abgeleitet werden. Mit anderen Worten entsprechen dann die Sollwerte a1.s bis a4.s z.B. den Flanscheinzügen a1.1 bis a4.1, welche nach ihrer Erfassung durch die Sensoranordnung 20 in der Speichereinheit 31 abgespeichert werden, wie durch die gestrichelte Pfeilverbindung in Fig. 5 angedeutet, und welche einer gewünschten platinenbezogenen Formänderungsverteilung bzw. platinenbezogenen Soll-Formänderungsverteilung im Tiefziehteil bzw. Umformteil UT entsprechen.

Im Betrieb des Umformwerkzeugs 1 lässt sich mit der oben beschriebenen Konfiguration ein automatisch ablaufendes Verfahren zur Optimierung (im Folgenden Optimierungsverfahren) der Platinenumformung im Umformwerkzeug 1 durchführen.

Gemäß dem Optimierungsverfahren wird bei der wie in Fig. 2 gezeigten Einarbeitung des Umformwerkzeugs 1 eine Platine PL zwischen die beiden Werkzeugteile 2, 5 des Umformwerkzeugs 1 eingebracht, um aus der Platine PL per Umformung ein Umformteil UT zu formen.

Vor der Umformung wird die Platinenpositionierung in Bezug auf das Umformwerkzeug 1 durchgeführt, indem die Platine PL an ihrem Umfangsrand PL1 an einer Mehrzahl von Kontaktstellen, an denen die Platinenkontaktierungselemente 12 der Einweiser 10 angeordnet sind, durch die Platinenkontaktierungselemente 12 kontaktiert und dadurch zwischen den beiden Werkzeugteilen 2, 5 quer zur Arbeitsrichtung R1 (in Querrichtung R2, R3) eindeutig positioniert wird.

Am Umformteil UT wird dann der mindestens eine mit der Umformung der Platine PL in Zusammenhang stehende Parameter erfasst. Genauer werden als der mindestens eine Parameter korrespondierend zu jeder Kontaktstelle die Flanscheinzüge a1.1 bis a4.1 als Kennwerte erfasst, welche mit der platinenbezogenen Formänderungsverteilung im Umformteil UT korrelieren.

Nach Bewertung der korrespondierend zu den jeweiligen Kontaktstellen erfassten Flanscheinzüge a1.1 bis a4.1 und ggf. anderer visueller und messtechnischer Untersuchungen wird hier exemplarisch das in Fig. 2 dargestellte Umformteil UT als "Gutteil" eingestuft. Daher werden die korrespondierend zu den jeweiligen Kontaktstellen erfassten Flanscheinzüge a1.1 bis a4.1 als Sollwerte a1.s bis a4.s in der Speichereinheit 31 abgespeichert.

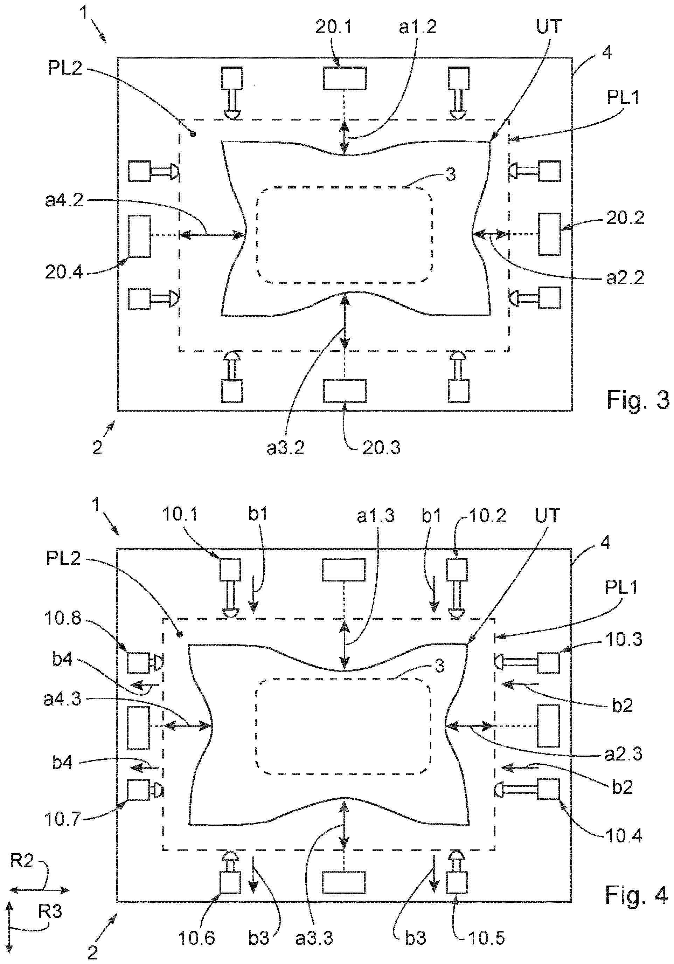

Gemäß dem Optimierungsverfahren wird bei einem wie in Fig. 3 gezeigten nachfolgenden Produktionsbetrieb des Umformwerkzeugs 1 eine weitere Platine PL zwischen die beiden Werkzeugteile 2, 5 des Umformwerkzeugs 1 eingebracht, um aus der Platine PL per Umformung ein Umformteil UT zu formen.

Vor der Umformung wird wieder die Platinenpositionierung in Bezug auf das Umformwerkzeug 1 durchgeführt, indem die Platine PL an ihrem Umfangsrand PL1 an den Kontaktstellen, an denen die Platinenkontaktierungselemente 12 der Einweiser 10 angeordnet sind, durch die Platinenkontaktierungselemente 12 kontaktiert und dadurch zwischen den beiden Werkzeugteilen 2, 5 quer zur Arbeitsrichtung R1 (in Querrichtung R2, R3) eindeutig positioniert wird.

Am Umformteil UT werden wieder korrespondierend zu jeder Kontaktstelle die Flanscheinzüge a1.2 bis a4.2 als Kennwerte erfasst, welche mit der platinenbezogenen Formänderungsverteilung im Umformteil UT korrelieren. Dann werden die korrespondierend zu den jeweiligen Kontaktstellen erfassten Flanscheinzüge a1.2 bis a4.2 jeweils mit ihrem zugehörigen vorbestimmten Sollwert a1.s bis a4.s verglichen. Dabei entsprechen die Sollwerte a1.s bis a4.s den bei der Einarbeitung für das "Gutteil" bestimmten Flanscheinzügen a1.1 bis a4.1.

Im Rahmen des Vergleichs in der Differenzbildnereinheit 32 wird für jeden Flanscheinzug a1.2 bis a4.2 eine Abweichung vom zugehörigen Sollwert a1.s bis a4.s bestimmt. Wie aus Fig. 3 ersichtlich ist, haben sich z.B. durch Prozessschwankungen wie eine andere Blechcharge oder andere Schmierungsbedingungen für die Platine PL die Flanscheinzüge a1.2 bis a4.2 gegenüber den Sollwerten a1.s bis a4.s verändert, weisen also eine Abweichung auf, die betragsmäßig größer als null ist.

Genauer haben sich die Flanscheinzüge a1.2 und a2.2 jeweils um ein bestimmtes Längenmaß reduziert. Andererseits hat sich der Flanscheinzug a3.2 um rein exemplarisch das gleiche Längenmaß, wie sich der Flanscheinzug a1.2 reduziert hat, vergrößert. In gleicher Weise hat sich der Flanscheinzug a4.2 um rein exemplarisch das gleiche Längenmaß, wie sich der Flanscheinzug a2.2 reduziert hat, vergrößert. In der vorliegenden Ausführungsform wird das Umformteil UT wegen des Ausmaßes der Veränderung bzw. der betragsmäßigen Größe der Abweichung als "Nichtgutteil" eingestuft.

Auf Basis der bestimmten jeweiligen Abweichungen werden nun in der Rechnereinheit 33 jeweilige Stellwerte b1 bis b4 (als Stellgrößen) für die Stellglieder 11 der Einweiser 10 zum Kompensieren bzw. Minimieren der Abweichung bestimmt. Diese Stellwerte b1 bis b4 können, aber müssen nicht zwingend, jeweils den negativen Wert der jeweils zugehörigen Abweichung abbilden.

Wie in Fig. 4 gezeigt, werden die Stellglieder 11 jeweils auf Basis der Stellwerte b1 bis b4 zum in Querrichtung R2 bzw. R3 Verfahren der Platinenkontaktierungselemente 12 angesteuert, um die Platinenpositionierung quer zur Arbeitsrichtung R1 auf Basis der Stellwerte b1 bis b4 für jede Kontaktstelle am Umfangsrand PL1 anzupassen. Mit anderen Worten wird gemäß Fig. 4 die Platinenpositionierung in die Richtung der zu großen Flanscheinzüge a3.2, a4.2 verschoben, um dort den Flanschbereich PL2 zu vergrößern und somit einen Kontaktdruck zwischen Platine PL und Platinenhalteranordnung 7 zu erhöhen.

Im Detail werden die Stellglieder 11 der Einweiser 10.1, 10.2 auf der einen Langseite beide mit dem Stellwert b1 angesteuert, werden die Stellglieder 11 der Einweiser 10.5, 10.6 auf der anderen Langseite beide mit dem Stellwert b3 (b3 = -b1) angesteuert, werden die Stellglieder 11 der Einweiser 10.3, 10.4 auf der einen Kurzseite beide mit dem Stellwert b2 angesteuert und werden die Stellglieder 11 der Einweiser 10.7, 10.8 auf der anderen Kurzseite beide mit dem Stellwert b4 (b4 = -b2) angesteuert.

Vor der Verstellung der Einweiser 10 oder danach wird wieder eine Platine PL zwischen die beiden Werkzeugteile 2, 5 des Umformwerkzeugs 1 eingebracht und per Platinenpositionierung (durch die Einweiser 10) eindeutig positioniert. Nach der Verstellung der Einweiser 10 und der Platinenpositionierung wird die Platine PL umgeformt und werden wieder die mit Bezug auf Fig. 3 und Fig. 4 bereits beschriebenen Erfassungsschritte und Kompensationsschritte für die Flanscheinzüge a1.n bis a4.n (Kennwerte) durchgeführt. Dieser Ablauf wird im Rahmen der Regelung wiederholt, bis wie in Fig. 4 gezeigt die jeweiligen Flanscheinzüge a1.3 bis a4.3 eine minimale Abweichung zu ihren jeweiligen Sollwerten a1.s bis a4.s haben (im Wesentlichen mit diesen übereinstimmen), sodass das Umformteil UT als "Gutteil" eingestuft werden kann.

Somit wird auf Basis der erfassten Flanscheinzüge a1.n bis a4.n (Kennwerte) die Platinenpositionierung quer zur Arbeitsrichtung R1 so angepasst, dass umformteilseitig die vorbestimmte Soll-Formänderungsverteilung erzielt wird. Im Ergebnis ist daher die Regeleinrichtung 30 eingerichtet, die Stellglieder 11 der Einweiser 10 auf Basis der erfassten Flanscheinzüge a1.n bis a4.n (Kennwerte) so zum Verfahren der Platinenkontaktierungselemente 12 anzusteuern, dass umformteilseitig die vorbestimmte Soll-Formänderungsverteilung erzielt wird.

Gemäß einer modifizierten Ausführungsform des Optimierungsverfahrens können als zur platinenbezogenen Formänderungsverteilung im Umformteil UT korrelierende Kennwerte auch andere Kennwerte als die Flanscheinzüge a1.n bis a4.n erfasst werden. Bevorzugt wird als der mindestens eine Kennwert je Kontaktstelle mindestens eines erfasst von dem platinenbezogenen Flanscheinzug a1.n bis a4.n des Umformteils UT, einem beim Umformen vorhandenen Kontaktdruck der Platinenhalteranordnung 7 zum Flanschabschnitt PL2, einer beim Umformen vorhandenen Temperatur der Platinenhalteranordnung 7, einer beim Umformen vorhandenen Flussgeschwindigkeit des Flanschabschnitts PL2 und einer beim Umformen vorhandenen Reibkraft zwischen Platinenhalteranordnung 7 und Flanschabschnitt PL2. Der Zusammenhang zwischen den Kennwerten und der Platinenlage bzw. Platinenpositionierung im Umformwerkzeug 1 kann dabei z.B. adaptiv (modellfrei) oder anhand eines experimentellen oder analytischen Modells gebildet werden.

Zur Realisierung des modifizierten Optimierungsverfahrens ist dann die Sensoranordnung 20 eingerichtet, als den mindestens einen Kennwert mindestens eines zu erfassen von dem platinenbezogenen Flanscheinzug a1.n bis a4.n des Umformteils UT, dem Kontaktdruck der Platinenhalteranordnung 7 zum Flanschabschnitt PL2, der Temperatur der Platinenhalteranordnung 7, der Flussgeschwindigkeit des Flanschabschnitts PL2 und der Reibkraft zwischen Platinenhalteranordnung 7 und Flanschabschnitt PL2. Hierzu kann die Sensoranordnung 20 geeignete Sensoren wie z.B. Wegmesssensoren, Dehnmessstreifen und/oder Temperatursensoren usw. aufweisen.

Gemäß einer weiteren modifizierten Ausführungsform des Optimierungsverfahrens können korrespondierend zu den jeweiligen Kontaktstellen am Umfangsrand PL1 einer Platine PL bzw. korrespondierend zu den jeweiligen Platinenkontaktierungselementen 12 mehrere unterschiedliche zur platinenbezogenen Formänderungsverteilung im Umformteil UT korrelierende Kennwerte erfasst werden. Als diese Kennwerte kommen insbesondere der platinenbezogene Flanscheinzug a1.n bis a4.n des Umformteils UT, der Kontaktdruck der Platinenhalteranordnung 7 zum Flanschabschnitt PL2, die Temperatur der Platinenhalteranordnung 7, die Flussgeschwindigkeit des Flanschabschnitts PL2 und/oder der Reibkraft zwischen Platinenhalteranordnung 7 und Flanschabschnitt PL2 in Betracht.

Gemäß dieser weiteren modifizierten Ausführungsform des Optimierungsverfahrens wird dann der Stellwert b1 bis b4 für eine jeweilige Kontaktstelle bestimmt unter kombinierter Auswertung (z.B. mittels einer rechnerischen Kombinationsvorschrift, die z.B. modellbasiert ist) von für die unterschiedlichen Kennwerte jeweils bestimmten Abweichungen zu ihren jeweiligen Sollwerten.

Zur Realisierung dieses weiteren modifizierten Optimierungsverfahrens ist dann die Sensoranordnung 20 eingerichtet, korrespondierend zu jedem Einweiser 10 mehrere unterschiedliche zur platinenbezogenen Formänderungsverteilung im Umformteil UT korrelierende Kennwerte zu erfassen. Insbesondere ist die Sensoranordnung 20 eingerichtet, den platinenbezogenen Flanscheinzug a1.n bis a4.n des Umformteils UT, den Kontaktdruck der Platinenhalteranordnung 7 zum Flanschabschnitt PL2, die Temperatur der Platinenhalteranordnung 7, die Flussgeschwindigkeit des Flanschabschnitts PL2 und/oder die Reibkraft zwischen Platinenhalteranordnung 7 und Flanschabschnitt PL2 zu erfassen. Hierzu kann die Sensoranordnung 20 geeignete Sensoren wie z.B. Wegmesssensoren, Dehnmessstreifen und/oder Temperatursensoren usw. aufweisen.

Außerdem ist die Regeleinrichtung 30 dann eingerichtet, den Stellwert für ein jeweiliges Stellglied 11 zu bestimmen unter kombinierter Auswertung (z.B. mittels einer rechnerischen Kombinationsvorschrift, die z.B. modellbasiert ist) von für die unterschiedlichen Kennwerte jeweils bestimmten Abweichungen zu ihren jeweiligen Sollwerten.

### Bezugszeichenliste

- 1: Umformwerkzeug
- 2: Werkzeugteil
- 3: Tiefziehstempel
- 4: Platinenhalter
- 5: Werkzeugteil
- 6: Tiefziehmatrize
- 6.1: Gegenplatinenhalter
- 7: Platinenhalteranordnung
- 10: Einweiser (allgemein)
- 10.1-10.8: Einweiser
- 11: Stellglied
- 12: Platinenkontaktierungselement
- 20: Sensoranordnung
- 20.1-20.4: Sensoren
- 30: Regeleinrichtung
- 31: Speichereinheit
- 32: Differenzbildnereinheit
- 33: Rechnereinheit
- a1.n-a4.n: Ist-Kennwert (Flanscheinzug)
- a1.1-a4.1: Flanscheinzug
- a1.2-a4.2: Flanscheinzug
- a1.3-a4.3: Flanscheinzug
- a1.s-a4.s: Sollwert (für Flanscheinzug)
- b1-b4: Stellwerte
- PL: Platine
- PL1: Umfangsrand
- PL2: Flanschabschnitt
- UT: Umformteil
- R1: Arbeitsrichtung
- R2, R3: Querrichtung

## Patentansprüche

1. Umformwerkzeug (1) mit:
zwei zueinander in einer Arbeitsrichtung (R1) relativbeweglichen Werkzeugteilen (2, 5) zum dazwischen Aufnehmen und Umformen einer Platine (PL), um aus dieser ein Umformteil (UT) zu formen,
einer Mehrzahl von verstellbaren Einweisern (10) zum Kontaktieren eines Umfangsrandes (PL1) der Platine (PL), um diese quer zur Arbeitsrichtung (R1) zwischen den beiden Werkzeugteilen (2, 5) zu positionieren, wobei die Einweiser (10) jeweils ein Stellglied (11) aufweisen, über welches ein Platinenkontaktierungselement (12) des jeweiligen Einweisers (10) zum Positionieren der Platine (PL) quer zur Arbeitsrichtung (R1) verfahrbar ist, und
einer Sensoranordnung (20) zum Erfassen mindestens eines mit der Umformung der Platine (PL) in Zusammenhang stehenden Parameters,
**dadurch gekennzeichnet, dass** die Sensoranordnung (20) eingerichtet ist, als den mindestens einen Parameter korrespondierend zu jedem Einweiser (10) mindestens einen Kennwert (a1.n - a4.n) zu erfassen, welcher mit einer platinenbezogenen Formänderungsverteilung im Umformteil (UT) korreliert, und dass eine Regeleinrichtung (30) vorgesehen ist, welche mit den jeweiligen Stellgliedern (11) der Einweiser (10) und der Sensoranordnung (20) verbunden ist und welche eingerichtet ist, die Stellglieder (11) auf Basis der erfassten Kennwerte (a1.n bis a4.n) so zum Verfahren der Platinenkontaktierungselemente (12) anzusteuern, dass umformteilseitig eine vorbestimmte Soll-Formänderungsverteilung erzielt wird.

2. Umformwerkzeug (1) gemäß Anspruch 1, wobei die Regeleinrichtung (30) eingerichtet ist, die korrespondierend zu den jeweiligen Einweisern (10) erfassten Kennwerte (a1.n - a4.n) jeweils mit einem zugehörigen vorbestimmten Sollwert (a1.s - a4.s) zu vergleichen, jeweils eine Abweichung des Kennwertes (a1.n bis a4.n) vom Sollwert (a1.s - a4.s) zu bestimmen, auf Basis der jeweiligen Abweichungen jeweilige Stellwerte (b1 - b4) für die Stellglieder (11) zum Kompensieren der Abweichung zu bestimmen und die Stellglieder (11) jeweils auf Basis der Stellwerte (b1 - b4) zum Verfahren der Platinenkontaktierungselemente (12) anzusteuern.

3. Umformwerkzeug (1) gemäß Anspruch 2, wobei die Sensoranordnung (20) eingerichtet ist, korrespondierend zu jedem Einweiser (10) mehrere unterschiedliche zur platinenbezogenen Formänderungsverteilung im Umformteil (UT) korrelierende Kennwerte (a1.n bis a4.n) zu erfassen, und wobei die Regeleinrichtung (30) eingerichtet ist, den Stellwert (b1 - b4) für ein jeweiliges Stellglied (11) zu bestimmen unter kombinierter Auswertung von für die unterschiedlichen Kennwerte (a1.n bis a4.n) jeweils bestimmten Abweichungen zu ihren jeweiligen Sollwerten (a1.s - a4.s).

4. Umformwerkzeug (1) gemäß einem der Ansprüche 1-3, wobei das Umformwerkzeug (1) eine Platinenhalteranordnung (7) aufweist, die einen Platinenhalter (4) und einen Gegenplatinenhalter (6.1) umfasst, welche parallel zu den Werkzeugteilen (2, 5) zueinander relativbeweglich sind, um beim Umformen einen entlang des Umfangsrandes (PL1) definierten Flanschabschnitt (PL2) der Platine (PL) zwischen einander zu klemmen, und wobei die Sensoranordnung (20) eingerichtet ist, als den mindestens einen Kennwert mindestens eines zu erfassen von einem platinenbezogenen Flanscheinzug (a1.n bis a4.n) des Umformteils (UT), einem Kontaktdruck der Platinenhalteranordnung (7) zum Flanschabschnitt (PL2), einer Temperatur der Platinenhalteranordnung (7), einer Flussgeschwindigkeit des Flanschabschnitts (PL2) und einer Reibkraft zwischen Platinenhalteranordnung (7) und Flanschabschnitt (PL2).

5. Umformwerkzeug (1) gemäß einem der Ansprüche 1-4, wobei die Sensoranordnung (20) eingerichtet ist, den mindestens einen Kennwert (a1.n bis a4.n) benachbart zu dem Platinenkontaktierungselement (12) jedes Einweisers (10) zu erfassen.

6. Verfahren zur Optimierung einer Platinenumformung in einem Umformwerkzeug (1), wobei:
eine Platine (PL) zwischen zwei zueinander in einer Arbeitsrichtung (R1) relativbewegliche Werkzeugteile (2, 5) des Umformwerkzeugs (1) eingebracht wird, um aus der Platine (PL) per Umformung ein Umformteil (UT) zu formen,
vor der Umformung eine Platinenpositionierung in Bezug auf das Umformwerkzeug (1) durchgeführt wird, indem die Platine (PL) an einem Umfangsrand (PL1) dieser an einer Mehrzahl von Kontaktstellen kontaktiert und dadurch zwischen den beiden Werkzeugteilen (2, 5) quer zur Arbeitsrichtung (R1) positioniert wird, und
mindestens ein mit der Umformung der Platine (PL) in Zusammenhang stehender Parameter erfasst wird,
**dadurch gekennzeichnet, dass** als der mindestens eine Parameter korrespondierend zu jeder Kontaktstelle mindestens ein Kennwert (a1.n - a4.n) erfasst wird, welcher mit einer platinenbezogenen Formänderungsverteilung im Umformteil (UT) korreliert, und dass auf Basis der erfassten Kennwerte (a1.n - a4.n) die Platinenpositionierung quer zur Arbeitsrichtung (R1) so angepasst wird, dass umformteilseitig eine vorbestimmte Soll-Formänderungsverteilung erzielt wird.

7. Verfahren gemäß Anspruch 6, wobei die korrespondierend zu den jeweiligen Kontaktstellen erfassten Kennwerte (a1.n - a4.n) jeweils mit einem zugehörigen vorbestimmten Sollwert (a1.s - a4.s) verglichen werden, jeweils eine Abweichung des Kennwertes (a1.n - a4.n) vom Sollwert (a1.s - a4.s) bestimmt wird, auf Basis der jeweiligen Abweichungen Stellwerte (b1 - b4) zum Kompensieren der Abweichung bestimmt werden und die Platinenpositionierung quer zur Arbeitsrichtung (R1) auf Basis der Stellwerte (b1 - b4) für jede Kontaktstelle angepasst wird.

8. Verfahren gemäß Anspruch 7, wobei korrespondierend zu den jeweiligen Kontaktstellen mehrere unterschiedliche zur platinenbezogenen Formänderungsverteilung im Umformteil (UT) korrelierende Kennwerte (a1.n - a4.n) erfasst werden, und wobei der Stellwert (b1 - b4) für eine jeweilige Kontaktstelle bestimmt wird unter kombinierter Auswertung von für die unterschiedlichen Kennwerte (a1.n - a4.n) jeweils bestimmten Abweichungen zu ihren jeweiligen Sollwerten (a1.s - a4.s).

9. Verfahren gemäß einem der Ansprüche 6-8, wobei beim Umformen ein entlang des Umfangsrandes (PL1) definierter Flanschabschnitt (PL2) der Platine (PL) geklemmt wird zwischen einem Platinenhalter (4) und einem Gegenplatinenhalter (6.1), welche parallel zu den Werkzeugteilen (2, 5) zueinander relativbeweglich sind und zusammen eine Platinenhalteranordnung (7) des Umformwerkzeugs (1) bilden, und wobei als der mindestens eine Kennwert mindestens eines erfasst wird von einem platinenbezogenen Flanscheinzug (a1.n - a4.n) des Umformteils (UT), einem Kontaktdruck der Platinenhalteranordnung (7) zum Flanschabschnitt (PL2), einer Temperatur der Platinenhalteranordnung (7), einer Flussgeschwindigkeit des Flanschabschnitts (PL2) und einer Reibkraft zwischen Platinenhalteranordnung (7) und Flanschabschnitt (PL2).

10. Verfahren gemäß einem der Ansprüche 6-9, wobei der mindestens eine Kennwert (a1.n - a4.n) benachbart zu jeder umfangsrandseitigen Kontaktstelle erfasst wird.

## Claims

1. Forming tool (1) comprising
two tool parts (2, 5) that can be moved relative to each other in a working direction (R1) for holding and forming a panel (PL) between them, in order to form a formed part (UT) therefrom,
a plurality of adjustable guides (10) for making contact with a circumferential edge (PL1) of the panel (PL) in order to position the latter between the two tool parts (2, 5) transversely with respect to the working direction (R1), the guides (10) each having an actuator (11), via which a panel contacting element (12) of the respective guide (10) can be moved transversely with respect to the working direction (R1) in order to position the panel (PL), and
a sensor arrangement (20) for sensing at least one parameter connected with the forming of the panel (PL),
**characterized in that** the sensor arrangement (20) is configured to sense, as the at least one parameter, in a manner corresponding to each guide (10), at least one characteristic value (a1.n - a4.n) which correlates with a panel-based shape change distribution in the formed part (UT), and **in that** a control device (30) is provided, which is connected to the respective actuators (11) of the guides (10) and the sensor arrangement (20), and which is configured to actuate the actuators (11) on the basis of the sensed characteristic values (a1.n to a4.n) to move the panel contacting elements (12) such that a predetermined desired shape change distribution is achieved on the formed part.

2. Forming tool (1) according to Claim 1, wherein the control device (30) is configured to compare the characteristic values (a1.n - a4.n) sensed in a manner corresponding to the respective guides (10) each with an associated predetermined desired value (a1.s - a4.s), in each case to determine a deviation of the characteristic value (a1.n to a4.n) from the desired value (a1.s - a4.s), on the basis of the respective deviations to determine respective actuating values (b1 - b4) for the actuators (11) in order to compensate for the deviation, and to actuate the actuators (11) respectively on the basis of the actuating values (b1 - b4) to move the panel contacting elements (12) .

3. Forming tool (1) according to Claim 2, wherein the sensor arrangement (20) is configured to sense, in a manner corresponding to each guide (10), a plurality of different characteristic values (a1.n to a4.n) correlating with the panel-based shape change distribution in the formed part (UT), and wherein the control device (30) is configured to determine the actuating value (b1 - b4) for a respective actuator (11) with a combined evaluation of respectively determined deviations from their respective desired values (a1.s - a4.s) for the different characteristic values (a1.n to a4.n) .

4. Forming tool (1) according to one of Claims 1-3, wherein the forming tool (1) has a panel holding assembly (7), which comprises a panel holder (4) and a mating panel holder (6.1), which can be moved relative to each other parallel to the tool parts (2, 5), in order during forming to clamp between them a flange section (PL2) of the panel (PL) defined along the circumferential edge (PL1), and wherein the sensor arrangement (20) is configured to sense, as the at least one characteristic value, at least one of a panel-based flange indentation (a1.n to a4.n) of the formed part (UT), a contact pressure of the panel holding assembly (7) relative to the flange section (PL2), a temperature of the panel holding assembly (7), a rate of flow of the flange section (PL2) and a frictional force between panel holding assembly (7) and flange section (PL2).

5. Forming tool (1) according to one of Claims 1-4, wherein the sensor arrangement (20) is configured to sense the at least one characteristic value (a1.n to a4.n) adjacent to the panel contacting element (12) of each guide (10).

6. Method for optimizing panel forming in a forming tool (1),
a panel (PL) being introduced between two tool parts (2, 5) of the forming tool (1) that can be moved relative to each other in a working direction (R1), in order to form a formed part (UT) from the panel (PL) by means of forming, before the forming, panel positioning in relation to the forming tool (1) being carried out, in that the panel (PL) is contacted at a plurality of contact points on a circumferential edge (PL1) thereof and, as a result, is positioned between the two tool parts (2, 5) transversely with respect to the working direction (R1), and
at least one parameter connected with the forming of the panel (PL) being sensed,
**characterized in that** as the at least one parameter, in a manner corresponding to each contact point, at least one characteristic value (a1.n - a4.n) which correlates with a panel-based shape change distribution in the formed part (UT) is sensed, and **in that**, on the basis of the sensed characteristic values (a1.n - a4.n), the panel positioning transversely with respect to the working direction (R1) is adapted such that a predetermined desired shape change distribution is achieved on the formed part.

7. Method according to Claim 6, wherein the characteristic values (a1.n - a4.n) sensed in a manner corresponding to the respective contact points are each compared with an associated predetermined desired value (a1.s - a4.s), in each case a deviation of the characteristic value (a1.n - a4.n) from the desired value (a1.s - a4.s) is determined, on the basis of the respective deviations actuating values (b1 - b4) in order to compensate for the deviation are determined, and the panel positioning transversely with respect to the working direction (R1) is adapted on the basis of the actuating values (b1 - b4) for each contact point.

8. Method according to Claim 7, wherein a plurality of different characteristic values (a1.n - a4.n) correlating with the panel-based shape change distribution in the formed part (UT) are sensed in a manner corresponding to the respective contact points, and wherein the actuating value (b1 - b4) for a respective contact point is determined with a combined evaluation of respectively determined deviations from their respective desired values (a1.s - a4.s) for the different characteristic values (a1.n - a4.n).

9. Method according to one of Claims 6-8, wherein, during forming, a flange section (PL2) of the panel (PL) defined along the circumferential edge (PL1) is clamped between a panel holder (4) and a mating panel holder (6.1), which can be moved relative to each other parallel to the tool parts (2, 5) and together form a panel holding assembly (7) of the forming tool (1), and wherein, as the at least one characteristic value, at least one of a panel-based flange indentation (a1.n - a4.n) of the formed part (UT), a contact pressure of the panel holding assembly (7) relative to the flange section (PL2), a temperature of the panel holding assembly (7), a rate of flow of the flange section (PL2) and a frictional force between panel holding assembly (7) and flange section (PL2) is sensed.

10. Method according to one of Claims 6-9, wherein the at least one characteristic value (a1.n - a4.n) is sensed adjacent to each contact point on the circumferential edge.

## Revendications

1. Outil de formage (1) comprenant :
deux parties d'outil (2, 5) qui peuvent être déplacées l'une par rapport à l'autre dans une direction de travail (R1) et qui sont destinées à recevoir entre elles et à mettre en forme un flan (PL) pour former une pièce formée (UT) à partir de celui-ci,
une pluralité d'éléments directeurs réglables (10) destinés à venir en contact avec un bord périphérique (PL1) du flan (PL) pour positionner celui-ci transversalement à la direction de travail (R1) entre les deux parties d'outil (2, 5), les éléments directeurs (10) comportant chacun un élément de réglage (11) permettant de déplacer un élément de contact de flan (12) de l'élément directeur respectif (10) pour positionner le flan (PL) transversalement à la direction de travail (R1), et
un ensemble de capteurs (20) destiné à détecter au moins un paramètre associé à la mise en forme du flan (PL),
**caractérisé en ce que** l'ensemble de capteurs (20) est conçu pour détecter, sous la forme d'au moins un paramètre correspondant à chaque élément directeur (10), au moins une valeur caractéristique (a1.n-a4.n) qui est en corrélation avec une distribution de changement de forme, liée au flan, dans la pièce formée (UT) et **en ce qu'**il est prévu un dispositif de régulation (30) qui est relié aux éléments de réglage respectifs (11) des éléments directeurs (10) et à l'ensemble de capteurs (20) et qui est conçu pour commander les éléments de réglage (11) sur la base des valeurs caractéristiques détectées (a1.n à a4.n) de manière à déplacer les éléments de contact de flan (12) de façon à obtenir une distribution de changement de forme de consigne prédéterminée du côté pièce formée.

2. Outil de formage (1) selon la revendication 1, le dispositif de régulation (30) étant conçu pour comparer chacune des valeurs caractéristiques (a1.n-a4.n) détectées correspondant aux éléments directeurs respectifs (10) à une valeur de consigne prédéterminée associée (a1.s-a4.s), pour déterminer à chaque fois un écart entre la valeur caractéristique (a1.n à a4.n) et la valeur de consigne (a1.s-a4.s), pour déterminer des valeurs de consignes respectives (b1-b4) des éléments de réglage (11) sur la base des écarts respectifs afin de compenser l'écart et pour commander les éléments de réglage (11) à chaque fois sur la base des valeurs de réglage (b1-b4) afin de déplacer les éléments de contact de flan (12).

3. Outil de formage (1) selon la revendication 2, l'ensemble de capteurs (20) est conçu pour détecter, en correspondance de chaque élément directeur (10), une pluralité de valeurs caractéristiques différentes (a1.n à a4.n) en corrélation avec la distribution de changement de forme, liée au flan, dans la pièce formée (UT) et le dispositif de réglage (30) est conçu pour déterminer la valeur de réglage (b1-b4) d'un élément de réglage respectif (11) par une évaluation combinée d'écarts, déterminés pour chacune des différentes valeurs caractéristiques (a1.n à a4.n), par rapport à leurs valeurs de consigne respectives (a1.s- a4.s).

4. Outil de formage (1) selon l'une des revendications 1 à 3, l'outil de formage (1) comprenant un ensemble de supports de flan (7) qui comprenant un support de flan (4) et un support de flan homologue (6.1) qui sont mobiles l'un par rapport à l'autre, parallèlement aux parties d'outil (2, 5), de manière à serrer entre eux, lors du formage, un partie formant bride (PL2) du flan (PL) qui est définie le long du bord périphérique (PL1), et l'ensemble de capteurs (20) étant conçu pour détecter sous la forme de l'au moins une valeur caractéristique au moins une grandeur parmi un enfoncement de bride (a1.n à a4.n), liée au flan, de la pièce formée (UT), une pression de contact de l'ensemble de supports de flan (7) par rapport à la partie formant bride (PL2), une température de l'ensemble de supports de flan (7), une vitesse de fluage de la partie formant bride (PL2) et une force de friction entre l'ensemble de supports de flan (7) et la partie formant bride (PL2).

5. Outil de formage (1) selon l'une des revendications 1 à 4, l'agencement de capteurs (20) étant conçu pour détecter l'au moins une valeur caractéristique (a1.n à a4.n) de manière adjacente à l'élément de contact de flan (12) de chaque élément directeur (10).

6. Procédé pour optimiser un formage de flan dans un outil de formage (1),
un flan (PL) étant inséré entre deux parties d'outil (2, 5) de l'outil de formage (1) qui sont mobiles l'une par rapport à l'autre dans une direction de travail (R1) afin de former une pièce formée (UT) à partir du flan (PL) par formage,
le formage étant précédé d'un positionnement du flan par rapport à l'outil de formage (1), par mise en contact du flan (PL) au niveau d'un bord périphérique (PL1) de celui-ci avec une pluralité de points de contact de manière à positionner le flan entre les deux parties d'outil (2, 5) transversalement à la direction de travail (R1), et
de la détection d'au moins un paramètre associé au formage du flan (PL),
**caractérisé en ce qu'**au moins une valeur caractéristique (a1.n-a4.n) est détectée sous la forme d'au moins un paramètre correspondant à chaque point de contact et est corrélée à une distribution de changement de forme, liée au flan, dans la pièce formée (UT) et **en ce que**, sur la base des valeurs caractéristiques détectées (a1.n-a4.n), le positionnement du flan transversalement à la direction de travail (R1) est adapté de manière à obtenir une distribution de changement de forme de consigne prédéterminée du côté pièce formée.

7. Procédé selon la revendication 6, les valeurs caractéristiques (a1.n-a4.n) détectées en correspondance des points de contact respectifs étant comparées chacune à une valeur de consigne (a1.s-a4.s) prédéterminée associée, un écart de la valeur caractéristique (a1.n-a4.n) par rapport à la valeur de consigne (a1.s-a4.s) étant déterminé à chaque fois, des valeurs de réglage (b1-b4) étant déterminées sur la base des écarts respectifs pour compenser l'écart et le positionnement du flan transversalement à la direction de travail (R1) étant adapté sur la base des valeurs de réglage (b1-b4) pour chaque point de contact.

8. Procédé selon la revendication 7, en correspondance des points de contact respectifs, une pluralité de valeurs caractéristiques différentes (a1.n-a4.n), en corrélation avec la distribution de changement de forme, liée au flan, dans la pièce formée (UT), étant détectée et la valeur de réglage (b1-b4), étant déterminée pour un point de contact respectif par une évaluation combinée des écarts, déterminés pour chacune des différentes valeurs caractéristiques (a1.na4.n), par rapport à leurs valeurs de consigne respectives (a1.s-a4.s).

9. Procédé selon l'une des revendications 6 à 8, une partie formant bride (PL2) du flan (PL), qui est définie le long du bord périphérique (PL1), étant serrée lors du formage entre un support de flan (4) et un support de flan homologue (6.1) qui sont mobiles l'un par rapport à l'autre parallèlement aux parties d'outil (2, 5) et qui forment conjointement un ensemble de supports de flan (7) de l' outil de formage (1), et au moins une grandeur parmi un enfoncement de bride (a1.n à a4.n), liée au flan, de la pièce formée (UT), une pression de contact de l'ensemble de supports de flan (7) par rapport à la partie formant bride (PL2), une température de l'ensemble de supports de flan (7), une vitesse de fluage de la partie formant bride (PL2) et une force de friction entre l'ensemble de supports de flan (7) et la partie formant bride (PL2), étant détectée sous la forme de l'au moins une valeur caractéristique.

10. Procédé selon l'une des revendications 6 à 9, l'au moins une valeur caractéristique (a1.n-a4.n) étant détectée de manière adjacente à chaque point de contact côté bord périphérique.
